Europäisches Patentamt

(19) European Patent Office

Office européen des brevets

(11) Veröffentlichungsnummer: **0 056 098**
**B1**

# (12) EUROPÄISCHE PATENTSCHRIFT

(45) Veröffentlichungstag der Patentschrift:
23.01.85

(21) Anmeldenummer: 81109194.1

(22) Anmeldetag: 29.10.81

(51) Int. Cl.⁴: **D 03 C 1/14**, F 16 D 11/06,
D 04 B 27/26

(54) Kupplungsvorrichtung, insbesondere für eine Textilmaschine.

(30) Priorität: 09.01.81 CH 103/81

(43) Veröffentlichungstag der Anmeldung:
21.07.82 Patentblatt 82/29

(45) Bekanntmachung des Hinweises auf die Patenterteilung:
23.01.85 Patentblatt 85/4

(84) Benannte Vertragsstaaten:
AT BE CH DE FR GB IT LI NL SE

(56) Entgegenhaltungen:
DE - A - 2 036 643
DE - A - 2 909 131
DE - B - 1 535 258
DE - B - 2 938 451
DE - C - 454 108

(73) Patentinhaber: Textilma AG, Seestrasse 97,
CH-6052 Hergiswil (CH)

(72) Erfinder: Speich, Francisco, Bleumattstrasse 440,
CH-5264 Gipf-Oberfrick (CH)

(74) Vertreter: Schmauder, Klaus Dieter et al, c/o Schmauder
& Wann Patentanwaltsbüro Nidelbadstrasse 75,
CH-8038 Zürich (CH)

**Beschreibung**

Die Erfindung betrifft eine Kupplungsvorrichtung gemäß Oberbegriff des Anspruches 1.

Kupplungsvorrichtungen der eingangs genannten Art sind bekannt, so beispielsweise aus der DE-B-1 535 258. Dabei bestehen die Keile aus zwei in gleicher Richtung annähernd radial zur Antriebswelle verschiebbar gelagerten Nutensteinen, die im Exzenterring gelagert sind und wechselweise hintereinander in eine Kerbe der Antriebswelle oder mit der anderen Stirnseite in eine Ausnehmung des Pleuels eingreifen. Zum Einrasten der Keile bzw. Nutensteine in die Ausnehmung in der Antriebswelle sind Schaltglieder vorhanden, welche die Nutensteine gegen die Antriebswelle drücken. Dabei dient der erste Nutenstein als Kupplungskeil und der zweite als Rückhaltekeil. Das Ausrasten der Nutensteine soll durch Federn erfolgen, welche die Nutensteine von der Antriebswelle weg gegen den Pleuel vorspannen. In diesem Falle dient der zweite Nutenstein als Kupplungskeil und der erste als Rückhaltekeil. Diese Kupplungsvorrichtung weist erhebliche Nachteile auf. Da die Nutensteine zwar unabhängig voneinander betätigbar aber nicht unabhängig voneinander angeordnet sind behindern sie sich unter dem Einfluß der auf die Nutensteine wirkenden Seitenkräfte gegenseitig. Wird beispielsweise die Antriebswelle für den Schaltvorgang kurzzeitig gebremst, so werden die Nutensteine durch die Schwungmasse des Exzenterringes und des Pleuels gegeneinander und an die vordere Flanke der Kerbe in der Antriebswelle gepreßt. Die bei schnell laufenden Textilmaschinen entstehenden hohen Massenkräfte können eine solche Größe annehmen, daß die Nutensteine in der Kerbe festgeklemmt werden und die Federkraft nicht ausreicht, um die Nutensteine aus der Kerbe der Antriebswelle auszuführen und in die Ausnehmung des Pleuels einzubringen. Dadurch sind der Antriebsdrehzahl Grenzen gesetzt. Außerdem bewirkt das Überfahren der Nutensteine über die Ränder der Kerbe einen Verschleiß der am Kupplungsprozeß beteiligten Teile. Im übrigen ist der Aufbau der Kupplungsvorrichtung relativ kompliziert, da stets zwei Nutensteine geschaltet werden müssen.

Aufgabe der Erfindung ist es nun, eine Kupplungsvorrichtung der eingangs genannten Art so auszubilden, daß auch bei schnell laufenden Antriebswellen ein einwandfreies Kuppeln sichergestellt ist, wobei dennoch der Aufbau der Kupplungsvorrichtung einfach sein soll.

Die erfindungsgemäße Aufgabe wird durch die kennzeichnenden Merkmale des Anspruches 1 gelöst. Dadurch, daß ein Keil als Kupplungskeil und der andere Keil als Rückhaltekeil ausgebildet sind und die Keile mit Abstand voneinander angeordnet sind, sind sie nicht nur voneinander unabhängig betätigbar, sondern behindern sich auch gegenseitig nicht. Der Rückhaltekeil kann somit beispielsweise beim Abbremsen den Kupplungskeil wirkungsvoll von den Kräften entlasten, die durch die abgebremsten Massen bewirkt werden, so daß der Kupplungskeil leicht zu schalten ist. Dies bedingt eine wesentliche Entlastung des Schaltgliedes, so daß dieses einfacher ausgeführt werden kann. Dabei wirkt sich weiter vorteilhaft aus, daß nur der Kupplungskeil vom Schaltglied geschaltet werden muß, während der Rückhaltekeil aufgrund der Steuerflächen selbstschaltend ist. Die geneigten Steuer- und Rückhalteflächen tragen dabei wesentlich zu einer Verschleißminderung bei. Damit ergibt sich also eine Kupplungsvorrichtung, die selbst bei schnell laufenden Maschinen eine einwandfreie Kupplung ermöglichen und nur geringem Verschleiß unterliegen.

Vorteilhafte Ausgestaltungen der Kupplungsvorrichtung sind in den Ansprüchen 1 bis 19 umschrieben.

Bei einer Ausbildung der Kupplungsvorrichtung nach Anspruch 2 ergibt sich trotz der abgeschrägten Angriffsflanken des Rückhaltekeiles eine optimale Kraftübertragung zwischen der Antriebswelle bzw. dem Pleuel und dem Rückhaltekeil. Eine Ausbildung nach Anspruch 3 erleichtert das Schalten des Rückhaltekeiles und verringert den Verschleiß.

Besonders vorteilhaft ist es, wenn die Rückhalteausnehmung nach Anspruch 4 ausgebildet ist. Dadurch wird verhindert, daß der Kupplungskeil in die Rückhalteausnehmung einrastet.

Der Anspruch 5 umschreibt eine besonders vorteilhafte Ausgestaltung der Kupplungsvorrichtung. Wirkt die Federkraft der Klinke senkrecht auf den Rückhaltekeil, so wird dadurch eine Reibungskraft erzeugt, die ein ungewolltes Verschieben des Rückhaltekeiles verhindert. Wirkt die Klinke hingegen in die Ausnehmung des Rückhaltekeils, so spannt sie diesen gegen die Antriebswelle vor, so wirkt sie einem ungewollten Ausrasten des Rückhaltekeiles entgegen.

Besonders vorteilhaft ist eine Ausbildung der Kupplungsausnehmung nach Anspruch 6, da dadurch ein schlagartiges Einrasten des Kupplungskeiles vermieden wird und dem Kupplungskeil ausreichend Zeit für ein sanftes Eingleiten in die Kupplungsausnehmung verbleibt. Durch die Ausgestaltung des Kupplungskeiles nach Anspruch 7 wird diesem eine federnde Eigenschaft verliehen, wodurch ein schlagartiges Kuppeln des Kupplungskeiles an der Angriffsflanke der Kupplungsausnehmung gedämpft wird. Eine Ausgestaltung des Kupplungskeiles nach Anspruch 8 bewirkt eine besonders zweckmäßige Kraftübertragung zwischen der Antriebswelle und dem Exzenterring, wobei Biegekräfte am Kupplungskeil vermieden werden. Dabei ist eine Weiterbildung nach den Ansprüchen 9 oder 10 zweckmäßig.

Grundsätzlich ist es möglich, daß die Leitkurve und die Ausnehmungen im Pleuel selbst angeordnet sind. Vorzugsweise ist die Kupplungsvorrichtung jedoch nach Anspruch 11 ausgebildet, wodurch einerseits die Herstellung der Kupplungsvorrichtung vereinfacht und zum andern ein Auswechseln zerschlissener Teile erleichtert wird. Dabei kann ein solcher Ring nach Anspruch 12 koaxial zur Antriebswelle feststehend am Gehäuse befestigt sein oder vorteilhafterweise nach Anspruch 13 am Pleuel. Die Ausbildung der Leitkurve und der Ausnehmungen an dem Ring gestattet es überdies, dessen Befestigungsstellen als Sicherheits-Scherstellen gemäß Anspruch 14 auszugestalten, wodurch überdies eine Sicherheitsvorrichtung geschaffen wird, die bei auftretenden Störungen der Kupplungsvorrichtungen die übrige Ausbildung der Antriebswelle, des Exzenterringes und des Pleuels vor Beschädigungen bewahrt. Entsprechend der Ausgestaltung nach Anspruch 15 kann der Ring überdies gleichzeitig zur gegenseitigen Halterung des Exzenterringes und des Pleuels dienen. Analoge Vorteile lassen sich bei der Ausgestaltung nach Anspruch 16 auch für die der Antriebswelle zugeordnete Seite der Kupplungsvorrichtung erzielen.

Besonders vorteilhaft ist die Ausgestaltung der Kupplung nach Anspruch 17. Das Einrasten des Kupplungskeiles unter Federvorspannung in die Kupplungsausnehmung ist einfacher möglich, als ein entsprechendes Auskuppeln. Das Auskuppeln wird vorteilhafter mittels des Schaltgliedes bewirkt; da beim Auskuppeln des Kupplungskeiles größere Seitenkräfte auf den Kupplungskeil einwirken als beim Einrasten bzw. Einkuppeln.

Für das Zusammenwirken zwischen Schaltglied und Kupplungskeil gibt es die verschiedensten Ausgestaltungen. Besonders vorteilhaft ist eine Ausbildung nach Anspruch 18. Dabei ist das Schaltglied vorzugsweise nach Anspruch 19 weitergebildet.

Die Kupplung zeichnet sich also durch einen besonders einfachen und wirkungsvollen Aufbau aus, der ein sicheres Schalten auch bei schnell laufenden Antriebswellen und unter Last ermöglicht. Dabei ist die Kupplung für die verschiedensten Verwendungszwecke geeignet. Besonders dient sie aber zum Antrieb von Maschinenteilen einer Textilmaschine so beispielsweise von Legeschienen einer Kettenwirkmaschine oder insbesondere zum Antrieb der Schäfte einer Webmaschine.

Ausführungsbeispiele der erfindungsgemäßen Kupplungsvorrichtung sind nachfolgend anhand der Zeichnungen näher beschrieben, dabei zeigt

Fig. 1 eine Kupplungsvorrichtung für einen Schaftantrieb in Seitenansicht;

Fig. 2 die Kupplungsvorrichtung der Fig. 1 im Schnitt II-II der Fig. 1;

Fig. 3 das Schaltglied der Kupplungsvorrichtung in Ansicht auf die Innenseite;

Fig. 4 die Anordnung des Kupplungskeiles und des Rückhaltekeiles an der Antriebswelle im Detail;

Fig. 5 eine weitere Ausbildung des Kupplungskeiles;

Fig. 6—12 die Kupplungsvorrichtung der Fig. 1 mit weggelassenem Schaltring in verschiedenen Kupplungsphasen und

Fig. 13 das Verdrängen eines ungewollt verschobenen Rückhaltekeils in die Soll-Lage.

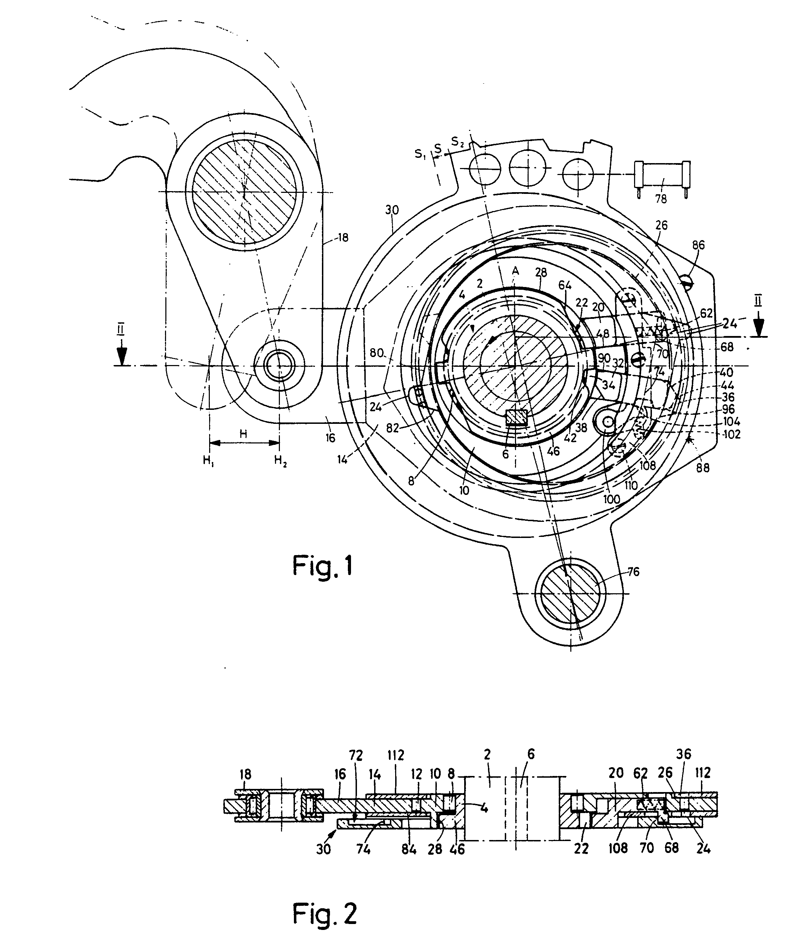

Die in den Fig. 1—4 dargestellte Kupplungsvorrichtung weist eine Antriebswelle 2 auf, die sich intermittierend dreht und jeweils nach 180° Drehwinkel annähernd oder vollständig zum Stillstand kommt. Auf der Antriebswelle 2 ist ein Lagerring 4 befestigt und durch einen Keil 6 gegen Verdrehen gesichert. Auf dem Lagerring 4 ist über ein Rollenlager 8 ein Exzenterring 10 angeordnet, an dem seinerseits über ein weiteres Rollenlager 12 ein Pleuel 14 angeschlossen ist. Die Pleuelstange 16 ist an einem Schwinghebel 18 angelenkt, der zum Antrieb eines nicht näher dargestellten Schaftes dient, wobei die Pleuelstange 16 einen Hub H von der Stellung $H_1$ bis $H_2$ ausführt. Zur Kupplung des Exzenterringes 10 mit der Antriebswelle 2 bzw. zum Festlegen des Exzenterringes 10 am Pleuel 14 dient ein Kupplungskeil 20, der wechselweise in mindestens eine mit der Antriebswelle 2 verbundene Kupplungsausnehmung 22 oder in mindestens eine mit dem Pleuel 14 verbundene Kupplungsausnehmung 24 einrastbar ist. Zwischen den Kupplungsausnehmungen 22 bzw. 24 ist der Kupplungskeil 20 mittels Leitkurven 26 bzw. 28 geführt, die mit dem Pleuel 14 bzw. der Antriebswelle 2 verbunden sind und ein Ausrasten aus der jeweiligen Kupplungsausnehmung verhindern. Ein mustermäßig betätigbares Schaltglied 30 dient zur Steuerung des Kupplungskeiles 20. Unabhängig vom Kupplungskeil 20 ist im Exzenterring 10 weiter ein Rückhaltekeil 32 mindestens annähernd radial verschiebbar gelagert, der entgegen der Antriebsrichtung A der Antriebswelle 2 wirksam ist. Der Rückhaltekeil ist selbstschaltend und rastet entsprechend der Stellung des Kupplungskeiles 20 in mindestens eine mit der Antriebswelle 2 zusammenwirkende Rückhalteausnehmung 34 bzw. in eine mit dem Pleuel 14 zusammenwirkende Rückhalteausnehmung 36 ein. Am Rückhaltekeil 32 und/oder an den Rückhalteausnehmungen 34 bzw. 36 sind Steuerflächen 38, 40 bzw. 42, 44 vorhanden, die ein Verdrängen des Rückhaltekeiles 32 aus einer Ausnehmung ermöglichen, wenn die Antriebswelle 2 den Exzenterring 10 bzw. der Exzenterring 10 den Pleuel 14 überholt und wenn das jeweils andere Ende des Rückhaltekeiles 32 einer Ausnehmung gegenübersteht. Hierzu muß der Neigungswinkel der Steuerflächen in Verschieberichtung des Rückhaltekeiles 32 größer sein als der Reibungswinkel. Zwischen den Rückhalteausnehmungen 34 bzw. 36 ist der Rückhaltekeil 32 ebenfalls an den Leitkurven 26 bzw. 28 gegen Ausrasten geführt.

Im vorliegenden Ausführungsbeispiel ist die Kupplungsvorrichtung so ausgebildet, daß sie an zwei um 180° versetzten Stellen ein Ankuppeln des Exzenterringes 10 an der Antriebswelle 2 ermöglicht. Dementsprechend sind auch die Kupplungsausnehmungen 22, 24 sowie die Rückhalteausnehmungen 34, 36 paarweise, jeweils um 180° versetzt angeordnet.

Die mit der Antriebswelle 2 zusammenwirkenden Kupplungsausnehmungen 22 und Rückhalteausnehmungen 34, sowie die Leitkurven 28 sind an einem Radialflansch 46 des Lagerringes 4 angeordnet. Dieser Radialflansch 46 dient dabei gleichzeitig als seitliche Begrenzung des Rollenlagers 8.

Der Kupplungskeil 20 ist in einer Nut 48 im Exzenterring 10 verschiebbar gelagert. Dabei ist die Anordnung so getroffen, daß der Kupplungskeil 20 parallel zu einem Radialstrahl 50 der Antriebswelle 2 verschiebbar ist. Der Kupplungskeil 20 weist eine vorzugsweise parallel zur Verschieberichtung 52 ausgerichtete Kupplungsflanke 54 auf, die mit einer entsprechenden Kupplungsflanke 56 der Kupplungsausnehmung 22 zusammenwirkt. Weiter enthält der Kupplungskeil 20 eine rückwärtige Stützflanke 58, die mit einer entsprechenden Stützfläche 60 im Exzenterring 10 zusammenwirkt. Dabei ist der Kupplungskeil 20 so weit vom Radialstrahl 50 entfernt, daß die Kupplungsflanke 56 der Kupplungsausnehmung 22 der Stützfläche 60 am Exzenterring 10 mindestens annähernd senkrecht gegenübersteht und mindestens annähernd gleich groß ist. Dadurch wird eine optimale Kraftübertragung erzielt und eine Biegebeanspruchung des Kupplungskeiles 20 vermieden.

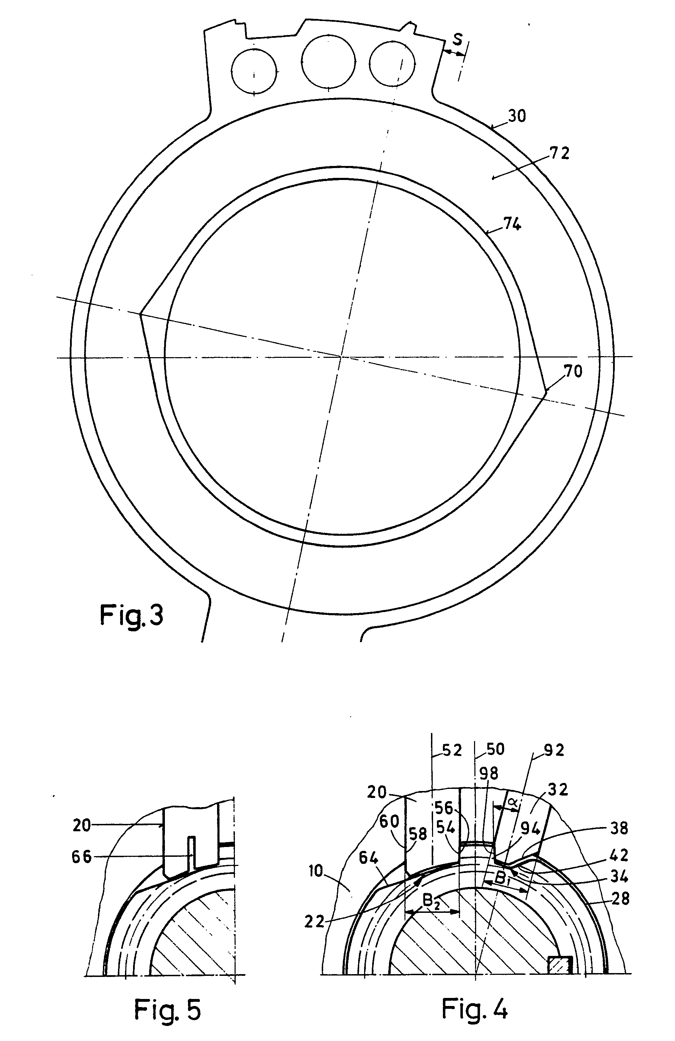

Zwischen dem Kupplungskeil 20 und dem Exzenterring 10 ist eine Vorspannfeder 62 angeordnet, die den Kupplungskeil 20 gegen die Antriebswelle 2 vorspannt und ein Einrasten des Kupplungskeiles 20 in die Kupplungsausnehmung 22 der Antriebswelle 2 ermöglicht, wenn das Schaltglied 30 in einer Kuppelstellung steht. Die Kupplungsausnehmung 22, die der Antriebswelle 2 zugeordnet ist, weist einen annähernd tangentialen Einlaufteil 64 auf, die ein sanftes Einkuppeln des Kupplungskeiles 20 ermöglicht. Dieses sanfte Einkuppeln wird durch die dem Einkuppeln dienende Vorspannfeder 62 begünstigt. Gemäß der Ausbildung der Fig. 5 kann der Kupplungskeil 20 mit einem Schlitz 66 versehen sein, der offen zur Kupplungsausnehmung 22 hin ausgeführt ist und dem Kupplungskeil eine federnde Eigenschaft verleiht, die das Einrasten des Kupplungskeiles 20 in der Kupplungsausnehmung 22 dämpft.

Der Kupplungskeil 20 ist mit einem seitlich vorstehenden Mitnehmernocken 68 ausgestattet, der mit entsprechenden Steuernocken 70 am Schaltglied 30 zusammenwirkt, um ein Auskuppeln des Kupplungsgliedes 20 aus der Kupplungsausnehmung 22 der Antriebswelle 2 zu ermöglichen.

Das Schaltglied 30 ist hierzu als Schaltring ausgebildet, welcher die Bewegungsbahn des Mitnehmernockens 68 überdeckt und eine Führungsnut 72 aufweist, in der der Mitnehmernocken kreist. Die Innenflanke 74 der Führungsnut 72 enthält die Steuernocken 70. Der Schaltring ist achsparallel, jedoch exzentrisch zur Antriebswelle 2 an einem Bolzen 76 verschwenkbar gelagert. Eine Betätigungsvorrichtung 78, z. B. ein pneumatisches Kolben/Zylinder-Aggregat, das über eine an sich bekannte Mustervorrichtung mustermäßig gesteuert wird, dient zum Verschwenken des Schaltgliedes um den Schaltweg S.

Der Kupplungskeil 20 greift mit seinem der Antriebswelle 2 abgewandten Ende in die Kupplungsausnehmung 24 ein, die dem Pleuel 14 zugeordnet ist. Diese Kupplungsausnehmung weist wiederum einen annähernd tangentialen Einlaufteil 80 auf und eine das Auskuppeln erleichternde geneigte Auslaufflanke 82. Die Leitkurve 26 geht in den Einlaufteil 80 über und schließt an die Auslaufflanke 82 an. Die Leitkurve 26 sowie die Kupplungsausnehmung 24 sind in einem Ring 84 angeordnet, der seitlich am Pleuel 14 angeordnet ist und radial gegen die Antriebswelle 2 vorsteht. Der Ring 84 dient dabei gleichzeitig zur Stützung des Pleuels 14 und des Rollenlagers 12 am Exzenterring 10. Der Ring ist über Schrauben 86 und Stifte 88 mit dem Pleuel 14 verschraubt. Die Schrauben 86 und die Stifte 88 können als Sicherheits-Scherstellen ausgestaltet sein, die abscheren, wenn der Kupplungskeil 20 blockiert.

Der Rückhaltekeil 32 ist ebenfalls in einer Nut 90 im Exzenterring 10 verschiebbar gelagert, wobei die Verschieberichtung im vorliegenden Beispiel radial zur Antriebswelle 2 liegt. Die vordere Angriffsflanke 94 des Rückhaltekeiles 32, die der Antriebswelle 2 zugewandt ist, sowie die hintere Angriffsflanke 96, die dem Pleuel 14 zugewandt ist, sind unter einem spitzen Winkel $\alpha$ zur Verschieberichtung 92 des Rückhaltekeiles 32 geneigt. Dadurch übt der Rückhaltekeil 32 eine Keilwirkung aus, so daß jegliches Spiel beim Kuppeln des Kupplungskeiles 20 ausgeschaltet wird. Die vordere Angriffsflanke 94 des der Antriebswelle 2 zugewandten Teiles des Rückhaltekeiles 32 sowie die Flanke 98 der Rückhalteausnehmung 34 sind mindestens annähernd parallel zum mittleren Radialstrahl 50 zwischen der Rückhalteausnehmung 34 und der Kupplungsausnehmung 22, wodurch eine optimale Kraftverteilung möglich ist. Die Breite $B_1$ der Rückhalteausnehmung 34 ist kleiner als die Breite $B_2$ des Kupplungskeiles 20, wodurch verhindert wird, daß der Kupplungskeil 20 in die Rückhalteausnehmung 34 einrasten kann.

Im Exzenterring 10 ist eine Klinke 100 verschwenkbar gelagert, die mit einer Feder 102 gegen den Rückhalteteil 32 vorgespannt ist. Wenn der Rückhalteteil 32 aus der Rückhalteausnehmung 34 ausgerastet ist, dann wirkt eine Nase 104 der Klinke 100 mindestens angenähert senkrecht auf den Rückhaltekeil 32. Die dadurch erzeugte Reibungskraft verhindert ein ungewolltes Verschieben des Rückhaltekeiles 32 in Richtung der Rückhalteausnehmung 34 der Antriebswelle 2. Ist der Rückhaltekeil 32 hingegen in der Rückhalteausnehmung 34 eingerastet, wo wirkt die Nase 104 in eine Ausnehmung 106 des Rückhaltekeiles 32 ein und spannt den Rückhaltekeil 32 in die Rückhalteausnehmung 34 vor. Dadurch wird einem ungewollten Ausrasten des Rückhaltekeiles 32 aus der Rückhalteausnehmung 34 vorgebeugt. Die Klinke 100 ist zusammen mit dem Rückhaltekeil 32 und dem Kupplungskeil 20 mittels eines Haltebleches 108 im Exzenterring 10 gehalten. Das Halteblech ist mittels Schrauben 110 mit dem Exzenterring 10 verschraubt.

Die Rückhalteausnehmung 36, die mit dem Pleuel 14 zusammenwirkt, ist ebenfalls in einem Ring 112 angeordnet, der auf der Rückseite des Pleuels 14 vorgesehen ist und entsprechend dem Ring 84 ausgebildet ist, der die Kupplungsausnehmung 24 des Kupplungskeiles 20 enthält. Der Ring 112 enthält auch die der Führung des Rückhaltekeiles 32 dienende Leitkurve 26. Der Ring 112 dient ebenfalls zur Halterung des Pleuels 14 sowie des Rollenlagers 12 am Exzenterring 10.

Im Gegensatz zur dargestellten Ausführungsform ist es auch möglich, die Ringe 84 und 112 nicht mit dem Pleuel 14 zu verbinden, sondern konzentrisch zur Antriebswelle 2 auszubilden und an einem nicht dargestellten Gehäuse feststehend anzuordnen.

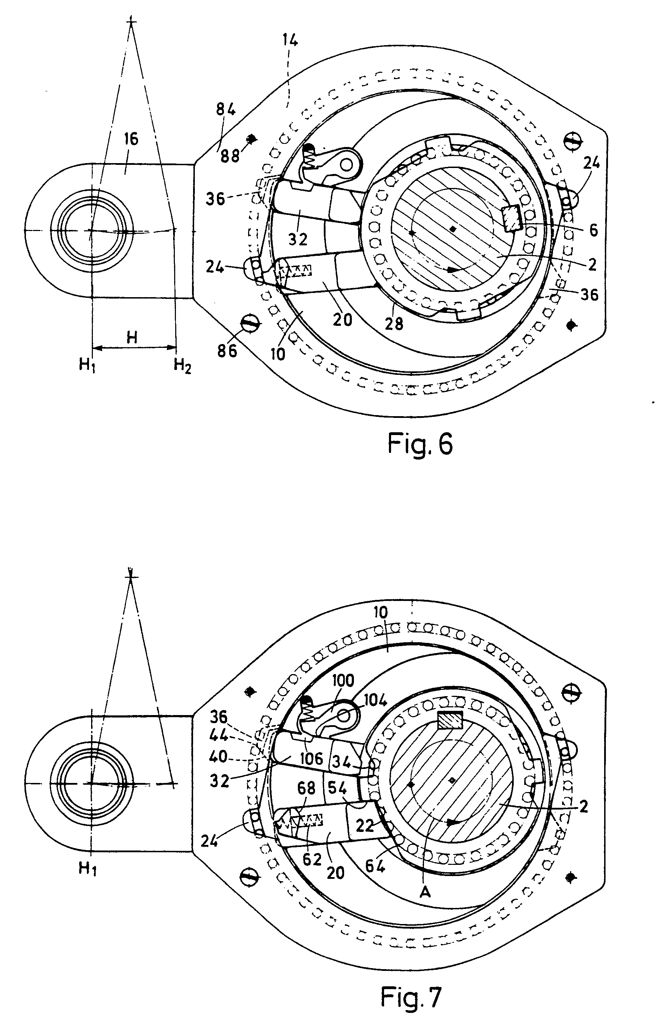

Die Funktionsweise der Kupplungsvorrichtung ist anhand der Fig. 6 bis 13 näher umschrieben.

Die Fig. 6 zeigt die Kupplungsvorrichtung in der Phase, in der die Antriebswelle 2 frei drehbar ist und der Kupplungskeil 20 in die Kupplungsausnehmung 24 und der Rückhaltekeil 32 in die Rückhalteausnehmung 36 einrasten, welche jeweils dem Pleuel 14 zugeordnet sind. Dadurch wird der Exzenterring 10 am Pleuel 14 festgehalten und gegen Verdrehen gesichert.

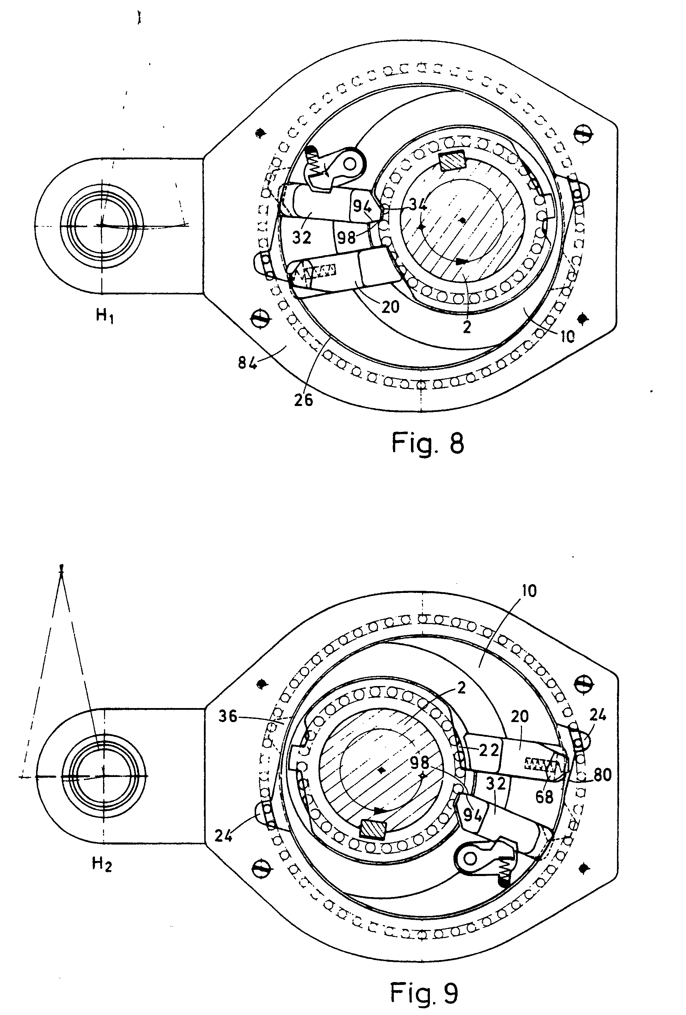

Die Fig. 7 und 8 zeigen das Einkuppeln der Kupplungsvorrichtung, das dann möglich ist, wenn das Schaltglied 30 die Schaltstellung $S_2$ einnimmt, so daß der Steuernocken 70 den Mitnehmernocken 68 des Kupplungskeiles 20 für die Kuppelstellung freigibt. Dementsprechend ist der Kupplungskeil 20 unter dem Einfluß der Vorspannfeder 62 bereits über den tangentialen Einlaufteil 64 in die Kupplungsausnehmung 22 eingelaufen und steht an der Kupplungsflanke 64 an. Der Rückhaltekeil 32, der mittels der Klinke 100 noch in der Rückhalteausnehmung 36 gehalten wird, steht nun der Rückhalteausnehmng 34 gegenüber, die der Antriebswelle 2 zugeordnet ist. Dreht die Antriebswelle 2 in Antriebsrichtung A weiter, so wird der Exzenterring 10 über den in der Kupplungsausnehmung 32 eingerasteten Kupplungskeil 20 mitgenommen. Dies bedingt, daß der ebenfalls mitgenommene Rückhaltekeil 32 mit seiner oberen Steuerfläche 40 an der Steuerfläche 44 der Rückhalteausnehmung 36 ansteht und aus dieser verdrängt wird. Der Rückhaltekeil 32 wird demnach gegen die Antriebswelle 2 in die entsprechende Rückhalteausnehmung 34 eingeschoben. Dabei greift die Klinke 100 mit ihrer Nase 104 in die Ausnehmung 106 und spannt den Rückhaltekeil 32 gegen die Rückhalteausnehmung 34 vor. Die vordere Angriffsflanke 94 des Rückhaltekeiles 32 wirkt mit der Flanke 98 der Rückhalteausnehmung 34 zusammen und verhindert ein Spiel zwischen der Antriebswelle 2 und dem Exzenterring 10. Während der Bewegung des mit der Antriebswelle 2 gekuppelten Exzenterringes 10 aus der in Fig. 8 gezeigten Stellung in die in Fig. 9 dargestellte Hublage $H_2$ steht die Stirnseite des Kupplungskeiles 20 an der Leitkurve 26 des Ringes 84 an und die Stirnseite des Rückhaltekeiles 32 an der Leitkurve 26 des Ringes 112, wodurch ein Auskuppeln des Kupplungskeiles 20 und des Rückhaltekeiles 32 verhindert wird.

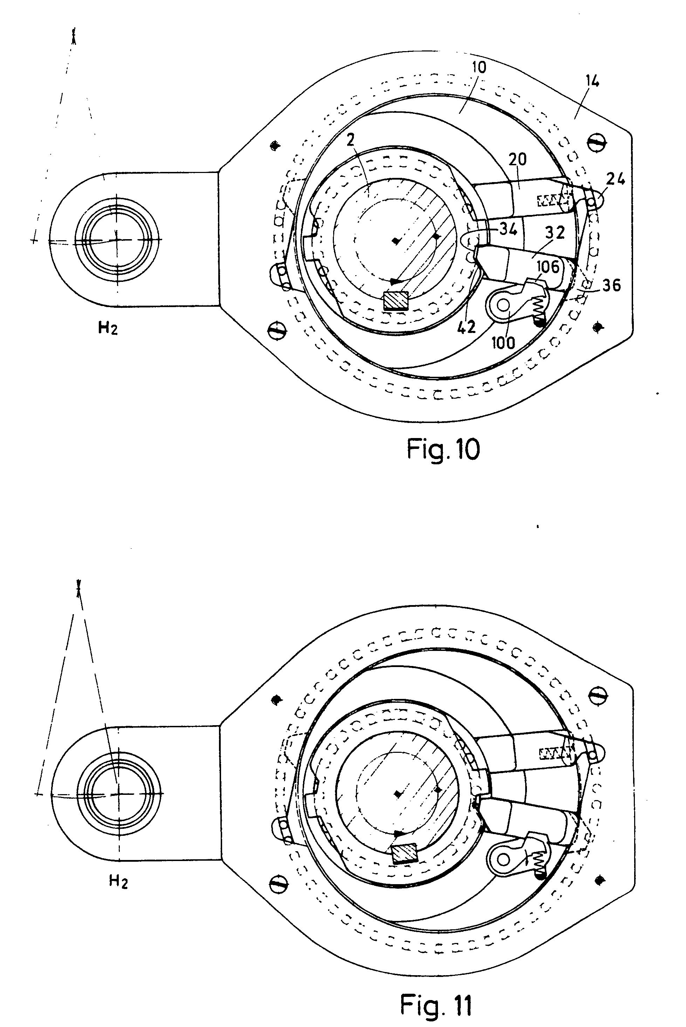

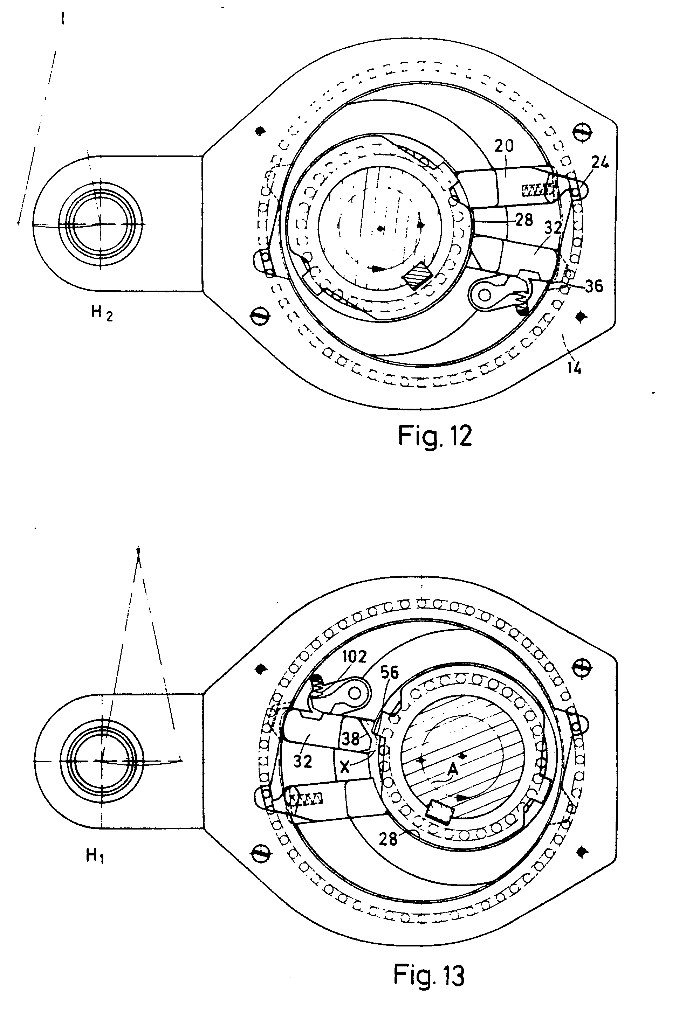

Steht das Schaltglied 30 in der in Fig. 1 gezeigten rechten Schaltstellung $S_2$, so wird die Kupplung entsprechend den Fig. 9 bis 12 gelöst. Dabei wirkt der Steuernocken 70 des Schaltgliedes 30 mit dem Mitnehmernocken 68 des Kupplungskeiles 20 zusammen und zieht diesen aus der Kupplungsausnehmung 22, die mit der Antriebswelle 2 in Verbindung steht. Entsprechend dem tangentialen Einlaufteil 80 der Kupplungsausnehmung 24 erfolgt das Auskuppeln allmählich, wie aus den Fig. 9 und 10 hervorgeht. Da die Antriebswelle während dieses Auskuppelvorganges gebremst wird, hat der Exzenterring 10 die Tendenz unter dem Einfluß der Massenkräfte die Antriebswelle 2 zu überholen. Dies wird verhindert durch den Rückhalteteil 32, der mit seiner vorderen Angriffsflanke 94 an der Flanke 98 der Rückhalteausnehmung 34 ansteht. Dadurch ist es möglich, den Kupplungskeil 20 klemmfrei aus der Kupplungsausnehmung 22 zu lösen. Sobald der Kupplungskeil 20 vollständig gelöst ist, wie dies in Fig. 10 dargestellt ist, greift der Kupplungskeil 20 in die Kupplungsausnehmung 24 ein, die mit dem Pleuel 14 in Verbindung steht, wodurch ein Weiterdrehen des Exzenterringes 10 verhindert wird. Dies bewirkt allerdings, daß die erneut anlaufende Antriebswelle 2 den Rückhaltekeil 32 mittels ihrer Steuerfläche 42 aus der Rückhalteausnehmung 34 verdrängt und den Rückhaltekeil 32 in der Rückhalteausnehmung 36, die mit dem Pleuel 14 in Verbindung steht, zum Einsatz bringt. Dabei wird auch gleichzeitig die Klinke 100 aus der Ausnehmung 106 des Rückhaltekeiles 32 verdrängt, wodurch die Vorspannung des Rückhaltekeiles gegen die Antriebswelle 2 aufgehoben wird und die Vorspannung senkrecht auf den Rückhaltekeil 32 wirkt, wie dies in Fig. 11 und 12 dargestellt ist.

Die Antriebswelle 2 kann nun frei weiter drehen, wobei der Kupplungskeil 20 und der Rückhaltekeil 32 mittels der Leitkurven 28 an seinem Auskuppeln aus der Kupplungsausnehmung 24 und der Rückhalteausnehmung 36, die mit dem Pleuel 14 zusammenwirken, gehindert werden. Damit kann ein neues Kupplungsspiel beginnen, wie in Fig. 6 bis 12 gezeigt ist, jedoch mit 180° verdrehtem Exzenterring.

Folgende Schaltzustände sind möglich:

A 1) Wird das Schaltglied 30 in die Stellung $S_1$ gesteuert, dann geht der Pleuel 14 in die Stellung $H_1$ bzw. er bleibt in dieser Stellung $H_1$;

A 2) Wird das Schaltglied 30 in die Stellung $S_2$ gesteuert, dann geht der Pleuel 14 in die Stellung $H_2$ bzw. er bleibt in dieser Stellung $H_2$.

Fig. 13 zeigt eine fast unwahrscheinliche Situation, in der der Rückhaltekeil 32 ungewollt, z. B. durch Bruch der Druckfeder 102, in die gestrichelte Lage X verschoben werden könnte. In diesem Falle würde die Kupplungsflanke 56 mit der Steuerfläche 38 des Rückhaltekeils 32, so zusammenwirken, daß der Rückhaltekeil 32 wieder in seine zugeordnete Lage verdrängt würde, ohne dabei Schaden zu nehmen.

### Bezugszeichenaufstellung

| | |
|---|---|
| A | Antriebsrichtung von 2 |
| $B_1$ | Breite von 20 |
| $B_2$ | Breite von 32 |
| H | Hub |
| $H_1$ | Hubstellung |
| $H_2$ | Hubstellung |
| S | Schaltweg |
| $S_1$ | Schaltstellung |
| $S_2$ | Schaltstellung |
| X | Stellung von 32 in Fig. 13 |
| $\alpha$ | Winkel von 98 mit 92 |
| 2 | Antriebswelle |
| 4 | Lagerring |
| 6 | Keil |
| 8 | Rollenlager |
| 10 | Exzenterring |
| 12 | Rollenlager |
| 14 | Pleuel |
| 16 | Pleuelstange |
| 18 | Schwinghebel |
| 20 | Kupplungskeil |
| 22 | Kupplungsausnehmung an 2 für 20 |
| 24 | Kupplungsausnehmung an 14 für 20 |
| 26 | Leitkurven für 22 an 14 |
| 28 | Leitkurven für 24 an 2 |
| 30 | Schaltglied |
| 32 | Rückhaltekeil |
| 34 | Rückhalteausnehmung an 2 |
| 36 | Rückhalteausnehmung an 14 |
| 38 | Steuerflächen für 32 an 2 |
| 40 | Steuerflächen für 32 an 14 |
| 42 | Steuerflächen von 34 an 2 |
| 44 | Steuerflächen von 36 an 14 |
| 46 | Radialflansch |
| 48 | Nut für 20 |
| 50 | Radialstrahl |
| 52 | Verschieberichtung |
| 54 | Kupplungsflanke an 20 |
| 56 | Kupplungsflanke an 22 |
| 58 | Stützflanke an 20 |
| 60 | Stützfläche an 10 |
| 62 | Vorspannfeder |
| 64 | tangentialer Einlaufteil von 22 |
| 66 | Schlitz in 20 |
| 68 | Mitnehmernocken |
| 70 | Steuernocken an 30 |
| 72 | Führungsnut an 30 |
| 74 | Innenflanke |
| 76 | Bolzen |
| 78 | Betätigungsvorrichtung |
| 80 | Einlaufteil an 24 |
| 82 | Auslaufflanke an 24 |
| 84 | Ring |
| 86 | Schrauben |
| 88 | Stifte |
| 90 | Nut |
| 92 | Verschieberichtung |
| 94 | Vordere Angriffsflanke von 32 an 2 |
| 96 | Hintere Angriffsflanke von 32 an 14 |
| 98 | Flanke von 34 |
| 100 | Klinke |
| 102 | Feder |
| 104 | Nase |
| 106 | Ausnehmung |
| 108 | Halteblech |
| 110 | Schrauben |
| 112 | Ring |

### Patentansprüche

1. Kupplungsvorrichtung, insbesondere für eine Textilmaschine, mit einem Pleuel (14), das über einen Exzenterring (10) auf einer vorzugsweise intermittierend drehenden Antriebswelle (2) gelagert ist, wobei im Exzenterring (10) zwei mindestens annähernd radial geführte zum Kuppeln bzw. Zurückhalten dienende Keile (20, 32) angeordnet sind, die mittels eines Schaltgliedes (30) betätigbar sind und wechselweise in mindestens eine mit der Antriebswelle (2) verbundene Ausnehmung (22, 34) oder in mindestens eine mit dem Pleuel (14) verbundene Ausnehmung (23, 36) einrastbar sind und die zwischen den Ausnehmungen mittels Leitkurven (26, 28) gegen Ausrasten gesichert sind, dadurch gekennzeichnet, daß ein Keil als Kupplungskeil (20) und der andere Keil als mit Abstand davon angeordneter, unabhängiger, selbstschaltender Rückhaltekeil (32) ausgebildet sind, wobei sperrende Angriffsflanken (94, 96) des Rückhaltekeiles (32) der Antriebswelle (2) und dem Pleuel (14) zugewandt sind und einen Neigungswinkel ($\alpha$) in Verschieberichtung (92) des Rückhaltekeiles (32) aufweisen, der kleiner ist als der Neigungswinkel der Steuerflächen (38, 40) des Rückhaltekeiles (32) in Verschieberichtung (92) und wobei der Antriebswelle (2) und dem Pleuel (14) zusätzlich mindestens je eine Rückhalteausnehmung (34, 36) für den Rückhaltekeil (32) zugeordnet sind, deren Profile (42, 98; 44) dem Profil (38, 94; 40, 96) des Rückhaltekeiles (32) angepaßt ist, so daß die Steuerflächen (38, 40) ein Verdrängen des Rückhaltekeiles (32) aus einer Rückhalteausnehmung (34, 36) ermöglichen, wenn die Antriebswelle (2) den Exzenterring (10) bzw. der Exzenterring (10) den Pleuel (14) überholt und wenn das jeweils andere Ende des Rückhaltekeiles (32) einer Rückhalteausnehmung (36, 34) gegenüber steht.

2. Kupplungsvorrichtung nach Anspruch 1, dadurch gekennzeichnet, daß die vordere Angriffsflanke (94) des der Antriebswelle (2) zugewandten Teiles des Rückhaltekeiles (32) sowie die Flanke (98) der zugehörigen Rückhalteausnehmung (34) mindestens annähernd parallel sind zum mittleren Radialstrahl (50) zwischen der Rückhalteausnehmung (34) und der Kupplungsausnehmung (22).

3. Kupplungsvorrichtung nach Anspruch 1, dadurch gekennzeichnet, daß die Rückhalteausnehmung (34, 36) und der zugewandte Teil des Rückhaltekeiles (32) abgerundete Kanten aufweisen.

4. Kupplungsvorrichtung nach Anspruch 1, dadurch gekennzeichnet, daß die Breite ($B_1$) der Rückhalteausnehmung (34) kleiner ist als die Breite ($B_2$) des Kupplungskeiles (20).

5. Kupplungsvorrichtung nach Anspruch 1, dadurch gekennzeichnet, daß im Exzenterring (10) eine gegen den Rückhaltekeil (32) vorgespannte Klinke (100) angeordnet ist, die annähernd senkrecht auf den Rückhaltekeil (32) wirkt, wenn dieser von der Antriebswelle (2) ausgerastet ist, und mittels einer Nase (104) in eine Ausnehmung (106) des Rückhaltekeiles (32) eingreift, wenn dieser in die Rückhalteausnehmung (34) der Antriebswelle (2) eingreift, und dabei den Rückhaltekeil (32) gegen die Antriebswelle (2) vorspannt.

6. Kupplungsvorrichtung nach Anspruch 1, dadurch gekennzeichnet, daß mindestens eine der Kupplungsausnehmungen (22, 24) einen tangentialen Einlaufteil (64, 80) aufweist.

7. Kupplungsvorrichtung nach Anspruch 1, dadurch gekennzeichnet, daß der Kupplungskeil (20) einen zur Kupplungsausnehmung (22) hin offenen Schlitz (66) aufweist.

8. Kupplungsvorrichtung nach Anspruch 1, dadurch gekennzeichnet, daß der Kupplungskeil (20) parallel zu einem Radialstrahl (50) der Antriebswelle (2) verschiebbar ist, wobei der Kupplungskeil (20) soweit vom Radialstrahl (50) entfernt ist, daß eine der Kupplungsflanke (56) der Kupplungsausnehmung (22) senkrecht gegenüberliegende Stützfläche (60) des Exzenterringes (10) mindestens annähernd gleich groß ist.

9. Kupplungsvorrichtung nach Anspruch 8, dadurch gekennzeichnet, daß die Kupplungsflanke (54) des Kupplungskeils (20) und die Kupplungsflanke (56) der Kupplungsausnehmung (22) unter einem Winkel zur Verschieberichtung (52) geneigt sind.

10. Kupplungsvorrichtung nach Anspruch 8, dadurch gekennzeichnet, daß die Kupplungsflanke (54) des Kupplungskeils (20) und die Kupplungsflanke (56) der Kupplungsausnehmung (22) parallel zur Verschieberichtung (52) ausgerichtet sind.

11. Kupplungsvorrichtung nach Anspruch 1, dadurch gekennzeichnet, daß die dem Pleuel (14) zugeordneten Leitkurve (26) und Ausnehmungen (24, 36) in mindestens einem seitlich des Exzenterringes (10) und des Pleuels (14) angeordneten Ring (84, 112) vorhanden sind.

12. Kupplungsvorrichtung nach Anspruch 11, dadurch gekennzeichnet, daß der Ring koaxial zur Antriebswelle feststehend am Gehäuse befestigt ist.

13. Kupplungsvorrichtung nach Anspruch 11, dadurch gekennzeichnet, daß der Ring (84, 112) koaxial zum Pleuellager am Pleuel (14) befestigt ist.

14. Kupplungsvorrichtung nach Anspruch 11 oder 12, dadurch gekennzeichnet, daß an den Befestigungsstellen (86, 88) des Ringes (84, 112) am Pleuel (14) Scherstifte (88) und/oder Scherschrauben (86) angeordnet sind.

15. Kupplungsvorrichtung nach Anspruch 11, dadurch gekennzeichnet, daß der Ring (84) das Pleuel (14), seine Lager (12) und einen Teil des Exzenterringes (10) überdeckt und als Halter für das Pleuel (14) am Exzenterring (10) dient, wobei vorzugsweise auch auf der anderen Seite des Pleuels (14) ein solcher Ring (112) angeordnet ist.

16. Kupplungsvorrichtung nach Anspruch 1, dadurch gekennzeichnet, daß die der Antriebswelle (2) zugeordneten Leitkurve (28) und Ausnehmungen (22, 34) in mindestens einem seitlich des Exzenterringes (10) an der Antriebswelle (2) angeordneten Ring vorhanden sind.

17. Kupplungsvorrichtung nach Anspruch 1, dadurch gekennzeichnet, daß der Kupplungskeil (20) mittels mindestens einer Vorspannfeder (62) in die Kupplungsausnehmung (22) der Antriebswelle (2) einrastet und mittels des Schaltgliedes (30) auskuppelbar ist.

18. Kupplungsvorrichtung nach Anspruch 1, dadurch gekennzeichnet, daß der Kupplungskeil (20) einen achsparallel zur Antriebswelle (2) vorstehenden Mitnehmernocken (68) aufweist, der mit einer Steuerkurve (70, 72) des Schaltgliedes (30) zusammenwirkt.

19. Kupplungsvorrichtung nach Anspruch 10, dadurch gekennzeichnet, daß das Schaltglied (30) ein die Bewegungsbahn des Mitnehmernockens (68) überdeckender Schaltring ist, der eine Führungsnut (72) aufweist, in der der Mitnehmernocken (68) kreist und deren Innenflanke (74) mindestens einen Steuernocken (70) aufweist, wobei der Schaltring achsparallel exzentrisch gelagert und mittels einer mustermäßig gesteuerten Betätigungsvorrichtung (78) pendelnd hin- und hergeschwenkt wird.

**Claims**

1. A coupling device, more especially for a textile machine, comprising a connecting rod (14) which is mounted by way of an eccentric ring (10) on a preferably intermittently rotating driving shaft (2), in which respect arranged in the exxentric ring (10) are two at least approximately radially guided wedges (20, 32) which serve for the coupling or restraining respectively and which are actuable by means of a witching member (30) and are engageable alternately into at least one recess (22, 34) connected to the driving shaft (2) or into at least one recess (23, 36) connected to the connecting rod (14) and which are protected between the recesses by means of lead cams (26, 28) against disengaging, characterised in that one wedge is designed as a coupling wedge (20) and the other wedge is designed as an independent self-switching restraining wedge (32) which is arranged at a spacing therefrom, in which respect blocking attack or loadapplication flanks (94, 96) of the retaining wedge (32) are turned to the driving shaft (2) and to the connecting rod (14) and have an angle of inclination ($\alpha$) in the direction of displacement (92) of the restraining wedge (32) which is smaller than the angle of inclination of the control surfaces (38, 40) of the restraining wedge (32) in the direction of displacement (92), and in which respect associated with the driving shaft (2) and the connecting rod (14) are additionally at least one restraining recess (34, 36) each for the restraining wedge (32), the profiles (42, 98; 44) of which are adapted to the profile (38, 94; 40, 96) of the restraining wedge (32), so that the control surfaces (38, 40) make possible a dislodging of the restraining wedge (32) out of a restraining recess (34, 36) when the driving shaft (2) overtakes the eccentric ring (10) or respectively the eccentric ring (10) overtakes the connecting rod (14) and when the respective other end of the restraining wedge (32) stands opposite a restraining recess (36, 34).

2. A coupling device according to claim 1, characterised in that the front attack flank (94) of that part of the restraining wedge (32) which is turned to the driving shaft (2) als well as the flank (98) of the relevant restraining recess (34) are at least approximately parallel to the mean radius (50) between the restraining recess (34) and the coupling recess (22).

3. A coupling device according to claim 1, characterised in that the restraining recess (34, 36) and the facing part of the restraining wedge (32) have rounded edges.

4. A coupling device according to claim 1, characterised in that the width ($B_1$) of the restraining recess (34) is smaller than the width ($B_2$) of the coupling wedge (20).

5. A coupling device according to claim 1, characterised in that arranged in the eccentric ring (10) is a pawl (100) which is biassed towards the restraining wedge (32) and which acts approximately perpendicularly on the restraining wedge (32) when this is disengaged from the driving shaft (2), and engages by means of a nose (104) into a recess (106) of the restraining wedge (32) when this engages into the restraining recess (34) of the driving shaft (2), and in so doing biasses the restraining wedge (32) towards the driving shaft (2).

6. A coupling device according to claim 1, characterised in that at least one of the coupling recesses (22, 24) has a tangential run-in part (64, 80).

7. A coupling device according to claim 1, characterised in that the coupling wedge (20) has a slot (66) which is open towards the coupling recess (22).

8. A coupling device according to claim 1, characterised in that the coupling part (20) is displaceable parallel to the mean radius (50) of the driving shaft (2), in which respect the coupling wedge (20) is removed to such an extent from the mean radius (50) that a supporting surface (60), perpendicularly opposite the coupling flank (56) of the coupling recess (22), of the eccentric ring (10) is at least approximately of the same size.

9. A coupling device according to claim 8, characterised in that the coupling flank (54) of the coupling wedge (20) and the coupling flank (56) of the coupling recess (22) are inclined at an angle to the direction of displacement (52).

10. A coupling device according to claim 8, characterised in that the coupling flank (54) of the coupling wedge (20) and the coupling flank (56) of the coupling recess (22) are aligned parallel to the direction of displacement (52).

11. A coupling device according to claim 1, characterised in that the lead cam (26) and recesses (24, 36) accociated with the connecting rod (14) are present in at least one ring (84, 112) arranged laterally of the eccentric ring (10) and of the connecting rod (14).

12. A coupling device according to claim 11, characterised in that the ring is fastened, coaxially to the driving shaft, stationarily to the housing.

13. A coupling device according to claim 11, characterised in that the ring (84, 112) is fastened, coaxially to the connecting rod bearing, to the connecting rod (14).

14. A coupling device according to claim 11 or 12, characterised in that shear pins (88) and/or shear screws (86) are arranged at the fastening points (86, 88) of the ring (84, 112) to the connecting rod (14).

15. A coupling device according to claim 11, characterised in that the ring (84) masks the connecting rod (14), its bearing (12) and a part of the eccentric ring (10) and serves as holder for the connecting rod (14) on the eccentric ring (10), in which respect preferably such a ring (112) is arranged also on the other side of the connecting rod (14).

16. A coupling device according to claim 1, characterised in that the lead cam (28) and recesses (22, 34) associated with the driving shaft (2) are present in at least one ring arranged laterally of the eccentric ring (10) on the driving shaft (2).

17. A coupling device according to claim 1, characterised in that the coupling wedge (20) engages by means of at least one biassing spring (62) into the coupling recess (22) of the driving shaft (2) and is disengageable by means of the switching member (30).

18. A coupling device according to claim 1, characterised in that the coupling wedge (20) has an entrainment cam (68) which protrudes axially-parallel to the driving shaft (2) and which co-operates with a control cam (70, 72) of the switching member (30).

19. A coupling device according to claim 18, characterised in that the switching member (3) is a switching ring which overties the path of motion of the entrainment cam (68) and which has a guide groove (72) in which the entrainment cam (68) moves in a circle and the inner flank (74) of which has at least one control cam (70), in which respect the switching ring is mounted axially-parallel and eccentrically and is swung to and fro in a pendulum manner by means of an actuating device (78) which is controlled in patternwise manner.

## Revendications

1. Dispositif d'accouplement, en particulier pour une machine à textile, comportant une bielle (14) qui est supportée via une baque excentrique (10) par un arbre d'entrainement (2) tournant de préférence de manière intermittente, la bague excentrique (10) comportant deux taquets (20, 32) guidés au moins sensiblement dans le sens raidal et servant à l'accouplement et à la retenue, qui sont aptes à être actionnés au moyen d'un organe sélecteur (30) et à venir alternativement en prise avec au moins une encoche (22, 34) reliée à l'arbre d'entrainement (2) ou avec au moins une encoche (23, 36) reliée à la bielle (14), et dont l'échappement est empêché entre les encoches au moyen de cames de guidage (26, 28), caractérisé en ce qu'un premier taquet est conçu comme un taquet d'accouplement (20) et l'autre taquet comme un taquet de retenue (32) auto-encliquetable, indépendant et disposé à une certaine distance du précédent, des flancs actifs (94, 96) participant à l'encliquetage du taquet de retenue (32) étant tournés vers l'arbre d'entrainement (2) et vers la bielle (14) et présentant dans le sens de coulissement (92) du taquet de retenue (32) un angle d'inclinaison $(\alpha)$ qui est plus petit que l'angle d'inclinaison des surfaces de commande (38, 40) du tquet de retenue (32) dans le sens de coulissement (92), l'arbre d'entrainement (2) et la bielle (14) présentant en outre chacun au moins une encoche de retenue (34, 36) destinée au taquet de retenue (32), les profils (42, 98; 44) étant adaptés au profil (38, 94; 40, 96) du taquet de retenue (32) de manière à ce que les surfaces de commande (38, 40) permettent un échappement du taquet de retenue (32) hors d'une encoche de retenue (34, 36) lorsque l'arbre d'entrainement (2) dépasse la bague excentrique (10) ou lorsque la bague excentrique (10) dépasse la bielle (14), et lorsque chaque autre extrémité du taquet de retenue (32) fait face à une encoche de retenue (36, 34).

2. Dispositif d'accouplement selon la revendication 1, caractérisé en ce que le flanc actif antérieur (94) de la partie du taquet (32) qui est tournée vers l'arbre d'entrainement (2) ainsi que le flanc (98) de l'encoche de retenue (34) correspondante sont au moins sensiblement parallèles à la médiane radiale (50) passant entre l'encoche de retenue (34) et l'encoche d'accouplement (22).

3. Dispositif d'accouplement selon la revendication 1, caractérisé en ce que l'encoche de retenue (34, 36) et la partie du taquet de retenue (32) qui lui fait face, présentent des arêtes arrondies.

4. Dispositif d'accouplement selon la revendication 1, caractérisé en ce que largeur ($B_1$) de l'encoche de retenue (34) est plus petite que la largeur ($B_2$) du taquet d'accouplement (20).

5. Dispositif d'accouplement selon la revendication 1, caractérisé en ce que la bague excentrique (10) comporte un cliquet (100) sollicité en appui contre le taquet de retenue (32) et s'appuyant dans une direction sensiblement perpendiculaire sur le taquet de retenue (32) lorsque celui-ci est libéré par l'arbre d'entrainement (2), et venant s'engager, au moyen d'une saillie (104) dans une encoche (106) du taquet de retenue (32) lorsque celui-ci vient en prise dans l'encoche de rentue (34) de l'arbre d'entrainement (2) et met ainsi le taquet de rentue (32) en appui contre l'arbre d'entrainement (2).

6. Dispositif d'accouplement selon la revendication 1, caractérisé en ce qu'au moins une des encoches d'accouplement (22, 34) présente une partie d'entrée tangentielle (64, 80).

7. Dispositif d'accouplement selon la revendication 1, caractérisé en ce que le taquet d'accouplement (20) présente une fente (66) ouverte vers l'encoche d'accouplement (22).

8. Dispositif d'accouplement selon la revendication 1, caractérisé en ce que le taquet d'accouplement (20) est apte à coulisser parallèlement à un rayon radial (50) de l'arbre d'entrainement (2), le taquet d'accouplement (20) étant à une distance de ce rayon radial (50) telle qu'une surface d'appui (60) de la bague excentrique (10) faisant face dans un sens perpendiculaire au flanc d'accouplement (56) de l'encoche d'accouplement (22) ait au moins sensiblement la même dimension.

9. Dispositif d'accouplement selon la revendication 8, caractérisé en ce que les flancs d'accouplement (54) du taquet d'accouplement (20) et les flancs d'accouplement (56) de l'encoche d'accouplement (22) sont inclinés en formant un angle avec le sens de coulissement (52).

10. Dispositif d'accouplement selon la revendication 8, caractérisé en ce que les flancs d'accouplement (54) du taquet d'accouplement (20) et les flancs d'accouplement (56) de l'encoche d'accouplement (22) s'étendent parallèlement au sens de coulissement (52).

11. Dispositif d'accouplement selon la revendication 1, caractérisé en ce que la came guidage (26) et les encoches (24, 36) associées à la bielle (14) sont portées par au moins une bague (84, 112) disposée latéralement à la bague excentrique (10) et à la bielle (14).

12. Dispositif d'accouplement selon la revendication 11, caractérisé en ce que la bague est montée de manière fixe sur le corps, coaxialement à l'arbre d'entrainement.

13. Dispositif d'accouplement selon la revendication 11, caractérisé en ce que la bague (84, 112) est fixée sur la bielle (14) coaxialement au palier de la bielle.

14. Dispositif d'accouplement selon la revendication 11 ou 12, caractérisé en ce que les points de fixation (86, 88) de la bague (84, 112) sur la bielle (14) sont pourvus de goujons de cisaillement (88) et/ou de boulons de cisaillement (86).

15. Dispositif d'accouplement selon la revendication 11, caractérisé en ce que la bague (84) recouvre la bielle (14), son palier (12) et une partie de la bague excentrique (10) et sert de support pour la bielle (14) sur la bague excentrique (10), une telle bague (112) étant de préférence également prévue sur l'autre côté de la bielle (14).

16. Dispositif d'accouplement selon la revendication 1, caractérisé en ce que la came di guidage (28) et les encoches (22, 34) associées à l'arbre d'entrainement (2) sont disposées dans au moins une bague placée latéralement à la bague excentrique (10) sur l'arbre d'entrainement (2).

17. Dispositif d'accouplement selon la revendication 1, caractérisé en ce que le taquet d'accouplement (20) s'engage dans l'encoche d'accouplement (22) de l'arbre d'entrainement (2) au moyen d'au moins un ressort de compression (62) et est apte à se désaccoupler au moyen de l'organe sélecteur (30).

18. Dispositif d'accouplement selon la revendication 1, caractérisé en ce que le taquet d'accouplement (20) présente un ergot d'entrainement (68) saillant parallèlement à l'axe de l'arbre d'entrainement (2), et coopérant avec une came de commande (70, 72) de l'organe sélecteur (30).

19. Dispositif d'accouplement selon la revendication 18, caractérisé en ce que l'organe sélecteur (30) est une bague de commande recouvrant la trajectoire de déplacement de l'ergot d'entrainement (68) et présentant une rainure de guidage (72) dans laquelle circule l'ergot d'entrainement (68) et dont le flanc intérieur (74) présente au moins une came de commande (70), la bague de commande étant montée de façon excentrique et parallèle à l'axe, et étant déplacée d'avant en arrière de façon pendulaire au moyen d'un dispositif de manœuvre commandé en fonction d'un modèle.

0 056 098

Fig. 1

Fig. 2

11

Fig. 3

Fig. 5

Fig. 4

Fig. 6

Fig. 7

Fig. 8

Fig. 9

Fig. 10

Fig. 11

Fig. 12

Fig. 13